# EUROPÄISCHE PATENTSCHRIFT

(11) **EP 1 398 229 B1**
(45) Veröffentlichungstag und Bekanntmachung des Hinweises auf die Patenterteilung: **26.03.2008**
(21) Anmeldenummer: 03005770.7
(22) Anmeldetag: 14.03.2003
(51) Int. Cl.: B60S 1/04, B60S 1/34

(54) **Scheibenwischvorrichtung, insbesondere für ein Kraftfahrzeug**
Wiper device, in particular for a vehicle
Dispositif d'essuie-glace, en particulier pour un véhicule

(30) Priorität: 11.09.2002 DE 10242114
(43) Veröffentlichungstag der Anmeldung: 17.03.2004
(73) Patentinhaber: ROBERT BOSCH GMBH, 70442 Stuttgart (DE)
(72) Erfinder: Zimmer, Joachim, 77880 Sasbach (DE)

(56) Entgegenhaltungen:
- EP-A- 0 015 172
- GB-A- 2 327 598
- US-A- 3 910 652

## Beschreibung

### Stand der Technik

Die Erfindung betrifft eine Scheibenwischvorrichtung für ein Kraftfahrzeug nach Gattung des unabhängigen Anspruchs.

Es sind schon zahlreiche Scheibenwischvorrichtungen, beispielsweise aus der DE 199 03 140 Al bekannt, die ein Wischerlager aufweisen, welches zumindest ein Lagergehäuse umfasst, in dem eine Wischerwelle gelagert und mittels eines Elementes axial fixiert ist, die an einem ersten Ende einen Wischerarm trägt. Die axiale Fixierung ist hierbei derart ausgebildet, dass das Element bei einer Krafteinwirkung auf den Wischerarm bzw. auf das erste Ende der Wischerwelle unter Energieaufnahme verformt wird. Prallt nun bei einem Unfall ein Fußgänger auf die Wischerarme oder Wischerwelle auf, so können diese zurückweichen, wodurch der Fußgänger sich weniger verletzen kann. Dadurch, daß das Element Energie aufzunehmen vermag, wird ausserdem vermieden, daß der Fußgänger durch das zurückweichen der Wischerarme mit der gesamten Energie auf die Fahrzeugkarrosserie aufprallt. Dazu sind die Elemente als in Reihe angeordnete, dünnwandige, tellerförmige Blechhülsen ausgebildet, die beispielsweise auch einen gewellten Bereich aufweisen können. Derartige Elemente sind jedoch aufwändig und kostenintensiv herzustellen.

Aus der US-A-3,910,652 ist eine Scheibenwischvorrichtung mit einem Wischerlager bekannt, das ein Lagergehäuse aufweist, welches aus einem inneren und einem äußeren rohrförmigen Abschnitt besteht, die über eine Wand verbunden sind. Der Bereich zwischen dem inneren und dem äußeren rohrförmigen Abschnitt ist durch Schaumgummi ausgefüllt.

### Vorteile der Erfindung

Die erfindungsgemäße Scheibenwischvorrichtung mit den Merkmalen des Hauptanspruchs hat den Vorteil, dass durch eine Ausbildung des Elementes aus Schaummaterial eine sehr kostengünstige, wirksame und einfach zu dimensionierende Möglichkeit eines Fußgängeraufprallschutzes für Scheibenwischvorrichtungen gegeben ist. Darüber hinaus wird durch das Schaummaterial eine besonders gute Energieabsorption erreicht, wodurch ein aufprallender Fußgänger besser geschützt ist.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, wenn das Element derart angeordnet ist, dass es bei Einwirkung einer Kraft, die größer ist als eine vorbestimmte Maximalkraft, in axialer Richtung auf das erste Ende der Wischerwelle verformbar, insbesondere komprimierbar, ist. Auf diese Weise wird die Energie beim Aufprall besonders gut aufgenommen.

In einer besonders einfachen und kostengünstigen Ausführung ist das Element zwischen dem Lagergehäuse und einem Ansatz an der Wischerwelle angeordnet.

Besonders vorteilhaft ist hierbei, wenn der Ansatz scheibenförmig ausgebildet ist und die Wischerwelle umfasst, sodass die Energie von der Wischerwelle auf einen großen Flächenbereich des Elementes abgegeben werden kann.

Weiters ist in einer einfachen Ausführungsvariante der Ansatz einstückig mit der Wischerwelle ausgebildet.

Darüber hinaus ist es als vorteilhaft anzusehen, wenn das Element im Wesentlichen rotationssymmetrisch, insbesondere hohlzylinderförmig, hohlkegelförmig oder hohlkugelförmig, ausgebildet ist und im Zentrum des Elements die Wischerwelle angeordnet ist. Dadurch ist auch bei einem schrägen Aufprall eine optimale Energieabsoprtion gewährleistet. Weiterhin wird nur wenig mehr Bauraum verbraucht.

Eine Ausbildung des Elementes aus Metallschaum, insbesondere Aluminiumschaum, ist besonders korrosionsbeständig und langlebig.

Ist der Wischerarm mittels eines Befestigungselementes am ersten Ende der Wischerwelle befestigt und das Befestigungselement unter Verformung des Elementes gegenüber dem Wischerarm verschiebbar, so kann die Wischerwelle auch dann zurückweichen, wenn der Wischerarm selbst beispielsweise bereits an der Fahrzeugkarosserie aufgeschlagen ist und nicht weiter zurückgeschoben werden kann.

In der einfachsten Ausführung ist das Element hierbei zwischen Wischerarm und Befestigungselement angeordnet.

Ein besonders haltbares Element wird dadurch erreicht, dass ein Schaumkern vorgesehen ist, der mit Deckelementen, insbesondere mit Deckblechen, als Sandwich-Konstruktion versehen ist.

### Zeichnungen

Ausführungsbeispiele der Erfindung sind in den Zeichnungen dargestellt und in der nachfolgenden Beschreibung näher erläutert. Es zeigen:
Figur 1 eine erfindungsgemäße Scheibenwischvorrichtung in perspektivischer Darstellung,
Figur 2 einen schematischen Schnitt durch ein erfindungsgemäßes Wischerlager vor einer Krafteinwirkung,
Figur 3 einen schematischen Schnitt durch ein erfindungsgemäßes Wischerlager aus Figur 2 in einer Variation,
Figur 4 einen schematischen Schnitt durch ein Wischerlager nach einem Aufprall als Krafteinwirkung,
Figur 5 einen schematischen Schnitt durch das Ende einer Wischerwelle mit Wischerarm vor einem Aufprall,
Figur 6 einen schematischen Schnitt durch ein erstes Ende einer Wischerwelle nach einem Aufprall und

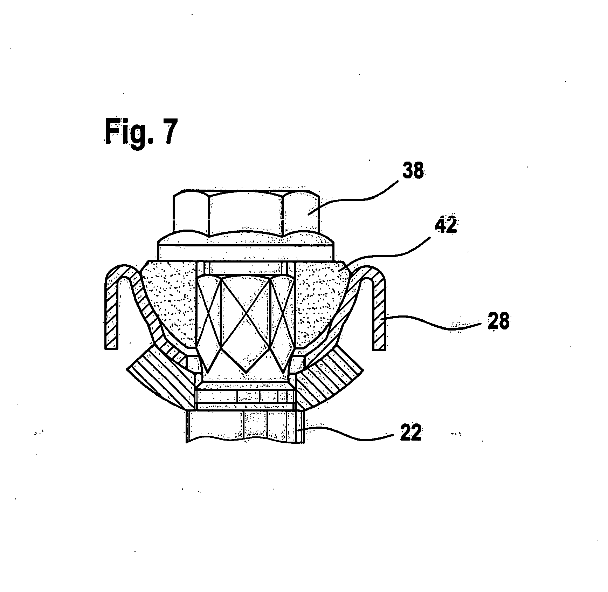

Figur 7 einen schematischen Schnitt durch eine Wischerwelle nach Figur 5 in einer Variation.

### Beschreibung des Ausführungsbeispiels

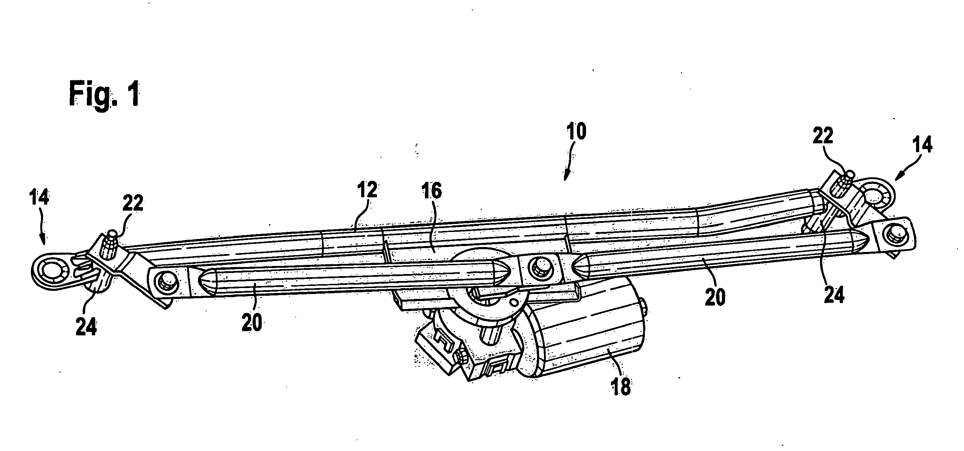

In Figur 1 ist eine erfindungsgemäße Scheibenwischvorrichtung 10 in einer perspektivischen Darstellung gezeigt. Diese umfasst im Wesentlichen ein Trägerrohr 12, welches an den Enden seiner Längserstreckung jeweils ein Wischerlager 14 trägt.

Weiterhin ist am Trägerrohr 12 ein Motorträger 16 befestigt, der einen Wischermotor 18 trägt. Dieser Wischermotor 18 treibt über Schubstangen 20 Wischerwellen 22 an, die in den Lagergehäusen 24 der Wischerlager 14 gelagert sind.

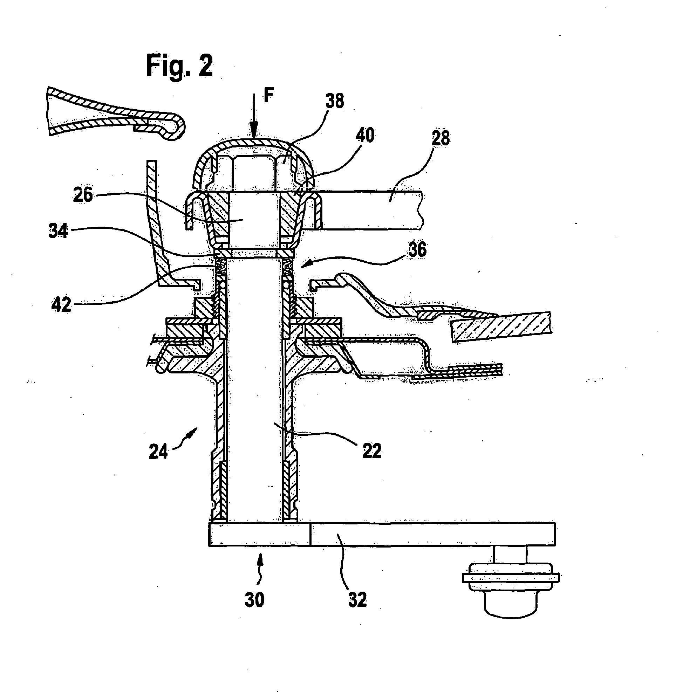

In Figur 2 ist ein Wischerlager 14 einer erfindungsgemäßen Scheibenwischvorrichtung 10 in einem schematischen Querschnitt detailliert dargestellt.

Die Wischerwelle 22 ist im Lagergehäuse 24 des Wischerlagers 14 gelagert. Sie weist ein erstes Ende 26 auf , an dem sie mit einem, hier nur teilweise gezeichneten Wischerarm 28 drehfest verbunden ist. Am anderen Ende 30 seiner Längserstreckung ist die Wischerwelle 22 mit einer Antriebskurbel 32 drehfest verbunden, die wiederum mit der Schubstange 20 (Figur 1) gelenkig verbunden ist. Die Wischerwelle 22 weist weiterhin einen Ansatz 34 auf, der als Scheibe ausgebildet ist und axial auf der Wischerwelle 22 fixiert ist. Der Ansatz 34 kann einstückig mit der Wischerwelle 22 ausgebildet sein oder beispielsweise auch als eine aufgesetzte Scheibe ausgebildet sind, die mittels eines Sprengringes 35, zumindest in Richtung des Wischerarmes 28 axial fixiert ist.

Die Wischerwelle 22 ragt aus der Stirnseite 36 des Lagergehäuses 24 heraus und weist an ihrem ersten Ende 26 ein Gewinde auf, auf welches das als Schraubenmutter ausgebildete Befestigungselement 38 zur Befestigung des Wischerarms 28 aufgeschraubt ist. Je nach Ausbildung des Wischerarms 28 ist zwischen dem Befestigungselement 38 und dem Wischerarm 28 noch ein zusätzlicher Befestigungsstutzen 40 angeordnet.

Zwischen der Stirnseite 36 des Lagergehäuses 24 und dem Ansatz 34 der Wischerwelle 22 ist das Element 42 angeordnet. Dieses Element 42 ist aus Aluminiumschaum ausgebildet und hat im Wesentlichen eine hohlzylinderförmige Gestalt, deren Höhe entsprechend dem Verschiebeweg gewählt ist. Dieses Element 42 ist auf die Wischerwelle 22 aufgeschoben, sodass es bei einer Krafteinwirkung F auf das erste Ende 26 der Wischerwelle 22 zusammengepresst wird. Dabei ist das Element 42 derart gewählt, dass die Kompression erst bei Überschreiten einer vorbestimmten Maximalkraft MK stattfindet. Weiterhin ist das Schaummaterial des Elementes 42 derart gewählt, dass bei der Krafteinwirkung F, wie sie typischerweise bei einem Aufprall eines Fußgängers auf die Wischerwelle 22 ausgeübt wird, eine gewisse Energiemenge dissipiert. Auf diese Weise kann von der Scheibenwischvorrichtung 10Energie aufgenommen werden, sodass der Fußgänger nicht mit seiner gesamten Bewegungsenergie auf die Fahrzeugkarosserie aufschlägt.

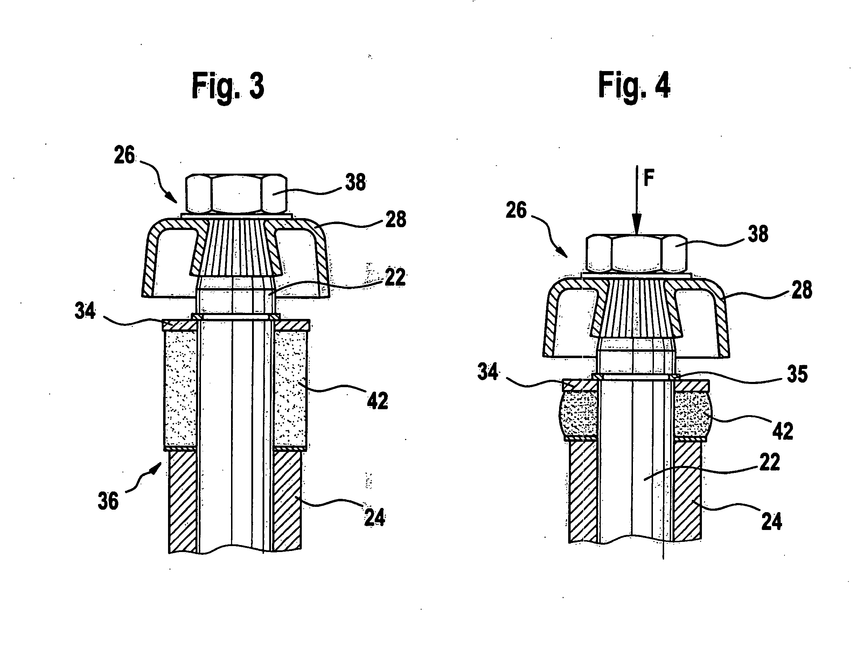

In Figur 3 ist das erste Ende 26 einer Wischerwelle 22 einer erfindungsgemäßen Scheibenwischvorrichtung 10detailliert dargestellt. Die Wischerwelle 22 ist im Lagergehäuse 24 gelagert und trägt an ihrem ersten Ende 26 den Wischerarm 28. Dazu weist die Wischerwelle 22 an ihrem ersten Ende einen Rändelkonus auf, der von einem Gewinde abgeschlossen wird. Der Wischerarm 28 ist auf den Rändelkonus aufgesteckt und mit dem Befestigungselement 38, hier als Schraubenmutter ausgebildet, drehfest verbunden. Auf ihrer dem Lagergehäuse 24 verbundenen Seite weist die Wischerwelle 22 im Bereich ihres ersten Endes 26 einen Ansatz 34 auf, der hier als kreisförmige Scheibe ausgebildet ist, deren Innendurchmesser im Wesentlichen dem Außendurchmesser der Wischerwelle 22 entspricht. Fixiert ist die Scheibe 34 mittels des Sprengrings 35, der in eine umlaufende Nut der Wischerwelle 22 eingreift. Um die Wischerwelle 22 herum ist zwischen der Stirnseite 36 des Lagergehäuses 24 und der Scheibe 34 das Element 42 aus Schaummaterial, hier aus geschäumtem Aluminium, dargestellt. Auf diese Weise ist die Wischerwelle 22 praktisch ohne Axialspiel im Lagergehäuse 24 fixiert.

In Figur 4 ist das erste Ende 26 der Wischerwelle 22 nach einem Crash, also nach einer Krafteinwirkung F auf das erste Ende 26, in Richtung des Lagergehäuses 24. Hierbei ist die Wischerwelle 22 in Richtung auf das Lagergehäuse 24 verschoben worden, wobei das Element 42 unter Energieaufnahme komprimiert wurde.

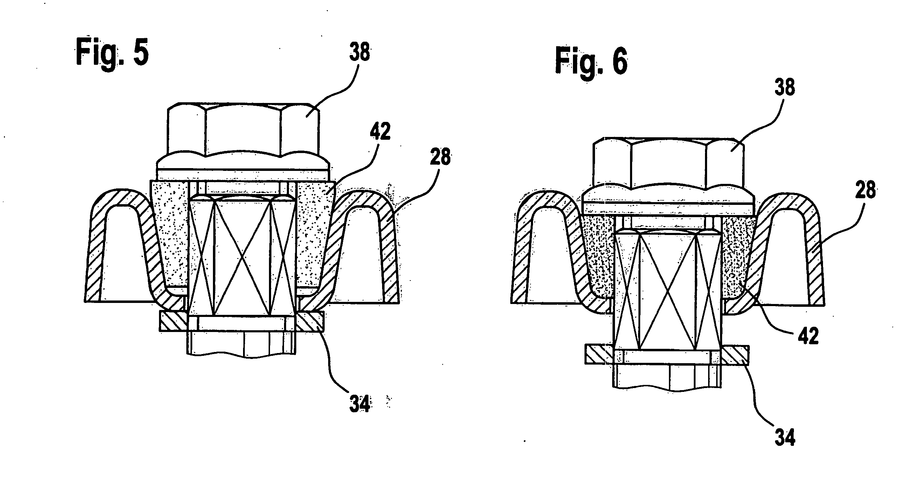

In Figur 5 ist eine Variation der Erfindung dargestellt. Hierbei ist das Element 42 als Befestigungsstutzen 40 (Figur 2) zwischen dem Befestigungselement 38 und dem Wischerarm 28 angeordnet. Auf diese Weise ist das Element 42 derart angeordnet, dass - wenn der Wischerarm 28 nicht mehr in Richtung des Lagergehäuses 24 verschiebbar ist - das Befestigungselement 38 noch nachzugeben vermag bzw. sich noch in Richtung auf das Lagergehäuse 24 verschieben kann. Hierbei gleitet die Wischerwelle 22 samt dem Befestigungselement 38 unter Kompression des Elements 42 in Richtung des Lagergehäuses 24. Dies ist in Figur 6 dargestellt. Im Extremfall kann das Befestigungselement 38 teilweise oder vollständig im Wischerarm 28 verschwinden.

Zur weiteren Vergrößerung des Kompressionsweges kann der Wischerarm auch über eine kalottenförmige Aufnahme verfügen, sodass das Element 42 kugelförmig ausgebildet sein kann und dass das Befestigungselement 38 bei einem Aufprall, also einer Kraftwirkung F, in Richtung auf das Lagergehäuse 24 im Innern des Wischerarmes 28 aufnehmbar ist.

In einer Variation der Erfindung kann das Schaummaterial auch am anderen Ende 30 der Wischerwelle 20 angeordnet sein. Hierbei kann auch vorgesehen sein, dass das Element 42 nicht auf Kompression, sondern auf Expansion, also auf Zug, belastet wird.

## Patentansprüche

1. Scheibenwischvorrichtung (10), insbesondere für ein Kraftfahrzeug, mit mindestens einem Wischerlager (14), welches ein Lagergehäuse (24) umfasst, einer Wischerwelle (22), die im Lagergehäuse (24) gelagert ist und an einem ersten Ende (26) einen Wischerarm (28) trägt, und einem Element (42), das die Wischerwelle (22) axial fixiert, wobei das Element (42) aus Schaummaterial ausgebildet ist, **dadurch gekennzeichnet, dass** das Element (42) bei einer Druckbelastung (F) auf das erste Ende der Wischerwelle(22) zusammengepresst wird.

2. Scheibenwischvorrichtung (10) nach Anspruch 1, **dadurch gekennzeichnet, dass** das Element (42) bei Einwirkung der Druckbelastung (F), die größer ist als eine vorbestimmbare Maximalkraft (MK) in axialer Richtung auf das erste Ende (26) der Wischerwelle (22) verformbar, insbesondere komprimierbar, ist.

3. Scheibenwischvorrichtung (10) nach einem der vorhergehenden Ansprüche, **dadurch gekennzeichnet, dass** die Wischerwelle (22) einen Ansatz (34) aufweist und das Element (42) zwischen dem Lagergehäuse (24) und dem Ansatz (34) angeordnet ist.

4. Scheibenwischvorrichtung (10) nach Anspruch 3, **dadurch gekennzeichnet, dass** der Ansatz (34) scheibenförmig ausgebildet ist und die Wischerwelle umfasst.

5. Scheibenwischvorrichtung (10) nach Anspruch 3 oder 4, **dadurch gekennzeichnet, dass** der Ansatz (34) einstückig mit der Wischerwelle (22) ausgebildet ist.

6. Scheibenwischvorrichtung (10) nach einem der vorhergehenden Ansprüche, **dadurch gekennzeichnet, dass** das Element (42) im Wesentlichen rotationssymmetrisch, insbesondere hohlzylinderförmig, hohlkegelförmig oder hohlkugelförmig, ausgebildet ist, in dessen Zentrum die Wischerwelle (22) angeordnet ist.

7. Scheibenwischvorrichtung (10) nach einem der vorhergehenden Ansprüche, **dadurch gekennzeichnet, dass** das Element (42) zumindest teilweise aus Metallschaum, insbesondere Aluminiumschaum, ausgebildet ist.

8. Scheibenwischvorrichtung (10) nach einem der vorhergehenden Ansprüche, **dadurch gekennzeichnet, dass** der Wischerarm (28) mittels eines Befestigungselementes (38) am ersten Ende (26) der Wischerwelle (22) befestigt ist und das Befestigungselement (38) unter Verformung des Elements (42) gegenüber dem Wischerarm (28) verschiebbar ist.

9. Scheibenwischvorrichtung (10) nach Anspruch 8, **dadurch gekennzeichnet, dass** das Element (42) zwischen Wischerarm (28) und Befestigungselement (38) angeordnet ist.

10. Scheibenwischvorrichtung (10) nach einem der vorhergehenden Ansprüche, **dadurch gekennzeichnet, dass** das Element (42) aus mindestens einem Schaumkern mit Deckelementen, insbesondere Deckblechen, ausgebildet ist.

## Claims

1. Wiper device (10), in particular for a motor vehicle, with at least one wiper bearing (14), which comprises a bearing housing (24), a wiper shaft (22), which is mounted in the bearing housing (24) and bears a wiper arm (28) at a first end (26), and an element (42) which fixes the wiper shaft (22) axially, the element (42) being formed from foam material, **characterized in that** the element (42), when subjected to a compression loading (F), is pressed together onto the first end of the wiper shaft (22).

2. Wiper device (10) according to Claim 1, **characterized in that** the element (42), when acted upon by the compression loading (F) which is greater than a predeterminable maximum force (MK), can be deformed, in particular can be compressed, in the axial direction onto the first end (26) of the wiper shaft (22).

3. Wiper device (10) according to one of the preceding claims, **characterized in that** the wiper shaft (22) has an attachment (34), and the element (42) is arranged between the bearing housing (24) and the attachment (34).

4. Wiper device (10) according to Claim 3, **characterized in that** the attachment (34) is designed in the shape of a disc and surrounds the wiper shaft.

5. Wiper device (10) according to Claim 3 or 4, **characterized in that** the attachment (34) is formed integrally with the wiper shaft (22).

6. Wiper device (10) according to one of the preceding claims, **characterized in that** the element (42), in the centre of which the wiper shaft (22) is arranged, is of essentially rotationally symmetrical design, in particular in the form of a hollow cylinder, in the form of a hollow cone or in the form of a hollow ball.

7. Wiper device (10) according to one of the preceding claims, **characterized in that** the element (42) is at least partially formed from metal foam, in particular aluminium foam.

8. Wiper device (10) according to one of the preceding claims, **characterized in that** the wiper arm (28) is fastened to the first end (26) of the wiper shaft (22) by means of a fastening element (38), and the fastening element (38) can be displaced in relation to the wiper arm (28) with deformation of the element (42).

9. Wiper device (10) according to Claim 8, **characterized in that** the element (42) is arranged between wiper arm (28) and fastening element (38).

10. Wiper device (10) according to one of the preceding claims, **characterized in that** the element (42) is formed from at least one foam core with cover elements, in particular cover sheets.

## Revendications

1. Dispositif d'essuie-glace (10), notamment pour un véhicule automobile, comportant au moins un palier d'essuie-glace (14) avec un boîtier de palier (24), un axe d'essuie-glace (22) logé dans le boîtier de palier (24) et dont la première extrémité (26) porte un bras d'essuie-glace (28) ainsi qu'un élément (42) en une mousse fixant axialement l'axe d'essuie-glace (22),
**caractérisé en ce que**
l'élément (42) est comprimé lorsqu'une contrainte de compression (F) est exercée sur la première extrémité de l'axe d'essuie-glace (22).

2. Dispositif d'essuie-glace (10) selon la revendication 1,
**caractérisé en ce que**
l'élément (42) se déforme et notamment se comprime sous l'action d'une contrainte de compression (F) supérieure à une force maximale prédéfinie (MK) exercée dans la direction axiale sur la première extrémité (26) de l'axe d'essuie-glace (22).

3. Dispositif d'essuie-glace (10) selon l'une des revendications précédentes,
**caractérisé en ce que**
l'axe d'essuie-glace (22) comporte un épaulement (34) et l'élément (42) est placé entre le boîtier de palier (24) et l'épaulement (34).

4. Dispositif d'essuie-glace (10) selon la revendication 3,
**caractérisé en ce que**
l'épaulement (34) en forme de disque entoure l'axe d'essuie-glace.

5. Dispositif d'essuie-glace (10) selon la revendication 3 ou 4,
**caractérisé en ce que**
l'épaulement (34) est en une seule pièce avec l'axe d'essuie-glace (22).

6. Dispositif d'essuie-glace (10) selon l'une des revendications précédentes,
**caractérisé en ce que**
l'élément (42) a pratiquement une forme symétrique en rotation, notamment une forme de cylindre creux, de cône creux ou de sphère creuse avec l'axe d'essuie-glace (22) en son centre.

7. Dispositif d'essuie-glace (10) selon l'une des revendications précédentes,
**caractérisé en ce que**
l'élément (42) est réalisé au moins en partie en une mousse de métal, notamment une mousse d'aluminium.

8. Dispositif d'essuie-glace (10) selon l'une des revendications précédentes,
**caractérisé en ce que**
le bras d'essuie-glace (28) est fixé par un premier élément de fixation (38) à une première extrémité (26) de l'axe d'essuie-glace (22) et l'élément de fixation (38) peut coulisser par rapport au bras d'essuie-glace (28) sous l'effet de la déformation de l'élément (42).

9. Dispositif d'essuie-glace (10) selon la revendication 8,
**caractérisé en ce que**
l'élément (42) est placé entre le bras d'essuie-glace (28) et l'élément de fixation (38).

10. Dispositif d'essuie-glace (10) selon l'une des revendications précédentes,
**caractérisé en ce que**
l'élément (42) se compose d'au moins un noyau en mousse avec des éléments de couverture, notamment des tôles de recouvrement.
